# EUROPÄISCHE PATENTSCHRIFT

(11) **EP 1 384 693 B1**
(45) Veröffentlichungstag und Bekanntmachung des Hinweises auf die Patenterteilung: **21.12.2005**
(21) Anmeldenummer: 02016570.0
(22) Anmeldetag: 24.07.2002
(51) Int. Cl.: B65G 11/06

(54) **Spiralrutsche**
Spiral chute
Rampe hélicoidale

(43) Veröffentlichungstag der Anmeldung: 28.01.2004
(73) Patentinhaber: SIEMENS AKTIENGESELLSCHAFT, 80333 München (DE)
(72) Erfinder: Mignano, Paolo, 28043 Bellinzago Novarese (NO) (IT)

(56) Entgegenhaltungen:
- WO-A-99/61352
- GB-A- 944 566
- GB-A- 2 213 806
- US-A- 1 515 890
- US-A- 3 565 226
- US-A- 6 006 888

## Beschreibung

Die Erfindung betrifft eine Spiralrutsche zum Transportieren von Stückgütern von einer höher gelegenden Transportebene zu einer tiefer gelegenden Transportebene, bestehend aus einer zentralen senkrechten Tragsäule, an der kreissegmentförmige, an ihren beiden radialen Längsseiten zu einer Gleitbahn zusammengefügte Platten wendelförmig und koaxial zu der Tragsäule an dieser befestigt sind, wobei die Platten auf ihren der Tragsäule abgewandten Außenseiten durch eine gemeinsame, im wesentlichen senkrechte Wand begrenzt sind, die über die gesamte Länge der Gleitbahn verläuft und wobei zum Ausgleich der auf der Innenseite und der Außenseite der Gleitbahn unterschiedlichen Wendelsteigungen jede kreissegmentförmige Platte in zueinander geneigte Ebene Dreieckflächen mit jeweils einer gemeinsamen Dreieckseite unterteilt ist, wobei jeweils eine andere Dreiecksseite jeder dieser Dreieckflächen mit einer höher gelegenden oder eine tiefer gelegenden Längsseite der kreissegmentförmigen Platte korrespondiert.

Spiralrutschen der eingangs beschriebenen Art werden in Herstellungs- und Verteilprozessen verwendet, um Stückgüter auf engen Raum in vertikaler Richtung zu verlagern. Derartige Einrichtungen haben eine große Durchsatzleistung, sind dabei einfach herstellbar und wartungsfrei. Die Gleitbahn selbst soll so beschaffen sein, dass Stückgut, wie Kästen, Packchen, Packete, Schachteln o.ä., möglichst nach dem Aufsetzen auf die Gleitbahn von selbst zu rutschen beginnen und ihre Abwärtsbewegung ohne Unterbrechung fortsetzen. Stauungen auf der Gleitbahn sind unbedingt zu vermeiden, weils sie in der Regel eine eingreifende Störung des vor und nachgeschalteten Transportsystems darstellen. Andererseits soll die Oberfläche der Gleitbahn aber derartig beschaffen sein, dass ein schonender Transport des zu fördernden Stückgutes über die Gleitbahn erfolgt und das nicht zu hohe Abwärtsgeschwindigkeiten erreicht werden. Gerade die Transportgeschwindigkeit auf der Gleitbahn ist abhängig von der Oberfläche der Gleitbahn und von der Steigung, mit der sich die Gleitbahn wendelförmig nach unten schraubt.

Aus der Konstruktion derartiger Spiralrutschen ergibt es sich, dass die die Gleitbahn bildenden kreissegmentförmigen Platten an ihren der Tragsäule zugewandten Seiten, d.h. dort wo sie an der Tragsäule befestigt sind, eine größere Steigung aufweisen müssen, als an der jeweils gegenüberliegenden Außenseite, an der die senkrechte Wand zur Führung des Stückgutes und zur Begrenzung der Gleitbahn befestigt ist. Um den Unterschied in der Steigung der Gleitbahn konstruktiv zu kompensieren, müssen die kreissegmentförmigen Platten in besonderer Weise gekrümmt, gekantet oder sonst wie angestuft sein, damit die radialen Längsseiten jeder Platte mit den aneinanderliegenden Längsseiten der jeweils benachbarten Platte zu einer Gleitbahn zusammengefügt werden können.

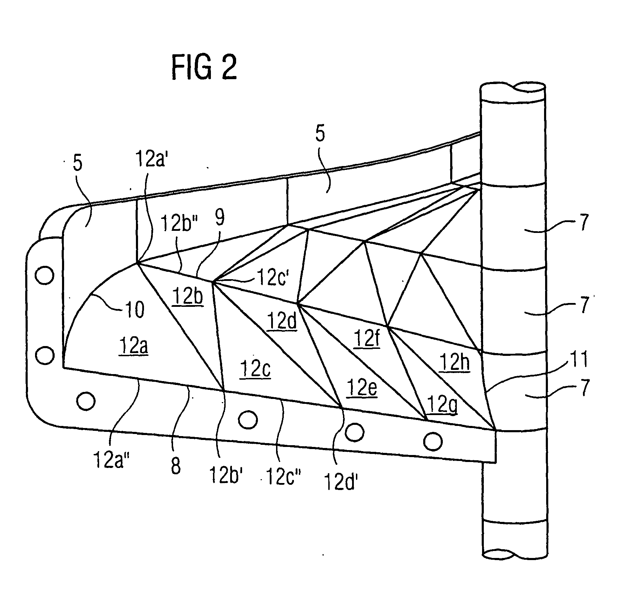

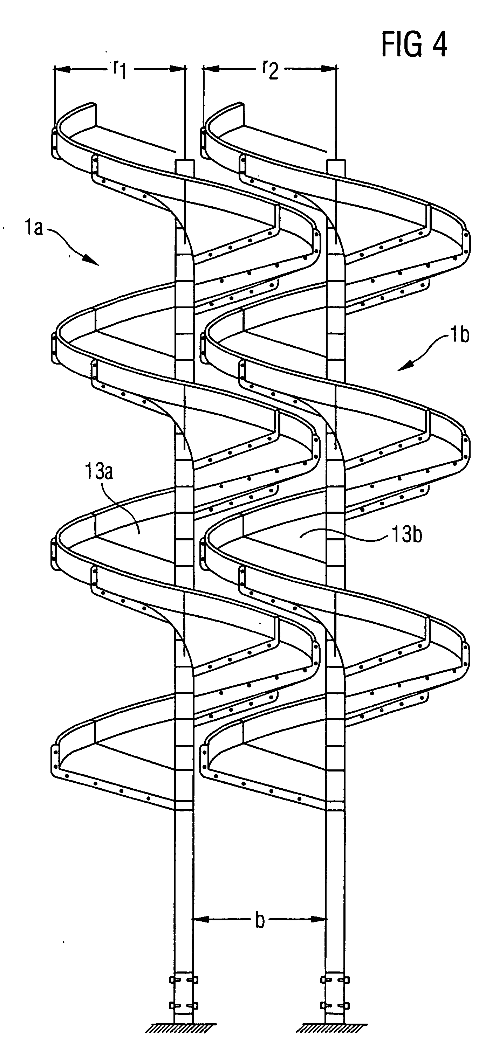

In der gattungsbildenden US-Patentschrift 3,565,226 sind verschiedene Lösungsvorschläge nebeneinander erörtert, nach denen eine Spiralrutsche gefertigt werden kann. So kann man beispielsweise eine Gleitbahn aus schmalen Kreissegmenten zusammengeschweißen, wie das in Fig. 2 der US-Patentschrift 3,565,226 schematisch dargestellt ist. Eine andere Möglichkeit besteht darin, in Spiralform gebogene Blechteile vorzusehen, wie dies in Fig. 4 der gleichen Druckschrift dargestellt ist. In der Zeichnungsfigur 3 des US-Patentes 3,565,226 wird schließlich eine Lösung vorgeschlagen, die im Oberbegriff des Patentanspruchs 1 als gattungsbildend beschrieben ist. Bei dieser bekannten Lösung ist jede kreissegmentförmige Platte entlang einer Diagonallinie abgekantet, die von der tieferen äußeren Kante der Platte zu der höheren, im Bereich der Tragsäule befestigten inneren Kante verläuft, so dass sich zwei ebene Dreiecke ergeben. Die obere Längsseite des einen Dreiecks verläuft entlang der Längsseite der benachbarten oberen Platte und die untere Längsseite des anderen Dreiecks verläuft entlang der Längsseite der unteren Platte, so dass die Platten, beispielsweise durch Verschweißen, problemlos miteinander verbunden werden können. Die den beiden Dreiecke gemeinsame Längsseite ist gekantet und bildet eine unvermeidbare Stufe innerhalb der kreissegmentförmigen Platte. Da jede der kreissegmentförmigen Platten eine solche Abstufung aufweist, addieren sich die Stufen dieser und benachbarter Platten zu einer "wendeltreppenförmigen" Gleitbahn. Es ist leicht einsichtig, dass eine solche gestufte Gleitbahn nicht unbedingt zum schonenden Transport von Stückgütern geeignet ist; denn jede der durch die Abkantungen entstehende ausgeprägte Stufen erzeugt einen Stoß im Stückgut, wenn sich dieses über die Spiralrutsche bewegt.

Der vorliegenden Erfindung liegt die Aufgabe zugrunde, eine Spiralrutsche der eingangs beschriebenen Art und insbesondere deren Gleitbahn so zu verbessern und zu gestalten, dass einerseits ein schonendes Rutschen auch empfindlichen Stückgutes über die Gleitbahn erfolgt und andererseits bei ausreichendem Gefälle ein staufreies kontinuierliches Gleiten über die Länge der Bahn erfolgt.

Zur Lösung der Aufgabe ist erfindungsgemäß vorgesehen, dass jede kreissegmentförmige Platte in mehr als zwei nebeneinander angeordnete, abwechselnd in zueinander geneigten Ebenen orientierte Dreieckflächen unterteilt ist, deren Dreieckspitzen und Dreieckgrundseiten benachbarte Dreieckflächen jeweils auf ein und der selben höhergelegenden oder der tiefergelegenden Längsseite der kreissegmentförmigen Platte orientiert sind.

Durch die Nebeneinanderanordnung von mehr als zwei in zueinander geneigten Ebenen orientierten Dreieckflächen auf ein und derselben kreissegmentförmigen Platte in der erfindungsgemäß vorgeschlagenen Weise werden die starke Abstufungen, wie sie die Gleitbahn des gattungsbildenden Standes der Technik vorsieht, ausgeschlossen. Dennoch ermöglicht Anordnung der Dreieckflächen mit ihren Abkantungen einen Ausgleich der eingangs beschriebenen Steigungsunterschiede über die Breite der kreissegmentförmigen Platte, sowie ein sicheres Gleiten des Stückgutes über die gesamte Spiralrutsche. Dadurch, dass das Stückgut auf mehreren abgekannteten Längsseiten eine der einbe Platte bildenden Dreiecke aufliegt, wird einerseits die Gleitbewegung durch geringere Reibflächen verbessert und andererseits die starke Abstufung von nur zwei Dreiecken pro Platte beim Stand der Technik auf mehrere kleinere Abstufungen jeder Platte verteilt. Auch empfindliche Güter lassen sich so gleitend transportieren.

Zur Optimierung der erfindungsgemäßen Spiralrutsche ist vorgesehen, dass die kreissegmentförmigen Platten an ihren Längsseiten mit sich nach unten erstreckenden Befestigungsflanschen versehen sind, mit denen benachbarte Platten miteinander verschraubt sind. Dieser Vorschlag ermöglicht ein leichtes baukastenartiges Aufbauen der Spiralrutsche durch zusammenfügen der kreissegmentförmigen erfindungsgemäß gekanteten Platten.

Besonders vorteilhaft sind nach einem weiteren Merkmal der Erfindung die kreissegmentförmigen Platten der Spiralrutsche modular ausgeführt und jeweils mittels einer die Tragsäule koaxial umgreifenden Buchse auf diese aufsteckbar, wobei die kreissegmentförmigen Platten mittels radial auskragender Tragarme an den Buchsen befestigt sind. Durch einfacheres Übereinanderstecken der kreissegmentförmigen Platten, d.h. durch Aufstecken der Buchsen auf die Tragsäule, lässt sich eine Spiralrutsche der erfindunsgemäßen Art baukastenartig herstellen, indem vorgefertigte gleichartige Teile einfach miteinander am Einbauort der Spiralrutsche miteinander verbunden werden.

Um ein möglichst zentrales Gleiten des Stückgutes auf der Gleitbahn zur erzielen, und ein zu starkes Bremsen des Stückgutes an der an den Außenseiten der Gleitbahn befestigten senkrechte Wand durch die nach außen gerichtete Fliehkräfte zu verhindern, ist nach einem weiteren Merkmal der Erfindung vorgesehen, dass die radial auskragenden Tragarme von der Tragsäule nach außen in einem Winkel zwischen 0° - 30° ansteigen. Dadurch ergibt sich eine Überhöhung der Gleitbahn, mit dem angestebten Ergebnis.

Erfindungsgemäß können die radial auskragenden Tragarme durch die sich nach unten erstreckenden Befestigungsflansche an den Platten selbst gebildet werden. Jeweils zwei Befestigungsflansche benachbarter Platten werden fest miteinander verschraubt und gegebenenfalls zusätzlich fixiert, was nach einem weiteren Merkmal der Erfindung für alle modularen Bauteile vorgesehen ist. Nach der Montage der Spiralrutsche durch Aufeinanderstecken und Verschrauben der einzelnen modularen Bauteile können diese, beispielsweise durch Verschweißen in ihrer Lage fixiert werden, so dass ein Verschieben der kreissegmentförmigen Platten verhindert wird.

Zur Erhöhung der Transportkapazität der Spiralrutsche ohne Erhöhung des Raumbedarfs wird in einer günstigen Alternative der Erfindung vorgeschlagen, an ein und derselben Tragsäule mehrere wendelförmige Gleitbahnen anzuordnen. In der Art eines mehrgängigen Gewindes läßt sich so in einfacher Weise die Transportkapazität mindestens verdoppeln.

Eine andere günstige Möglichkeit zur raumsparenden Kapazitätserhöhung ergibt sich, wenn nach einem weiteren Merkmal der Erfindung mehrere Spiralrutschen dicht und ineinander verschachtelt angeordnet sind, wobei der lichte Abstand zweier benachbarter Tragsäulen geringer als die Summe der Radien dieser benachbarten Spiralrutschen ist.

Die vorliegende Erfindung schafft eine einfache, aber sehr wirkungsvolle Konstruktion einer Spiralrutsche, in dem optimale Gleitverhältnisse durch die besondere Profilierung der einzelnen Platten erreicht werden. Die Herstellung der Spiralrutsche ist äußerst einfach und preiswert, gemessen am bekannten Stand der Technik. Der Transport der Stückgüter von der oberen zur unteren Transportebene erfolgt sehr schonend, so dass auch zerbrechliche Gegenstände mit der erfindungsgemäßen Spiralrutsche problemlos transportiert werden können.

Ein Ausführungsbeispiel der Erfindung ist in der Zeichnung dargestellt und wird nachfolgend beschrieben. Es zeigt:
- Fig. 1: die schematische Ansicht einer Spiralrutsche nach der Erfindung,
- Fig. 2: die Ausbildung der die Gleitbahn bildenden kreissegmentförmigen Platten und
- Fig. 4 und 5: je eine alternative Anordnung der Erfindung

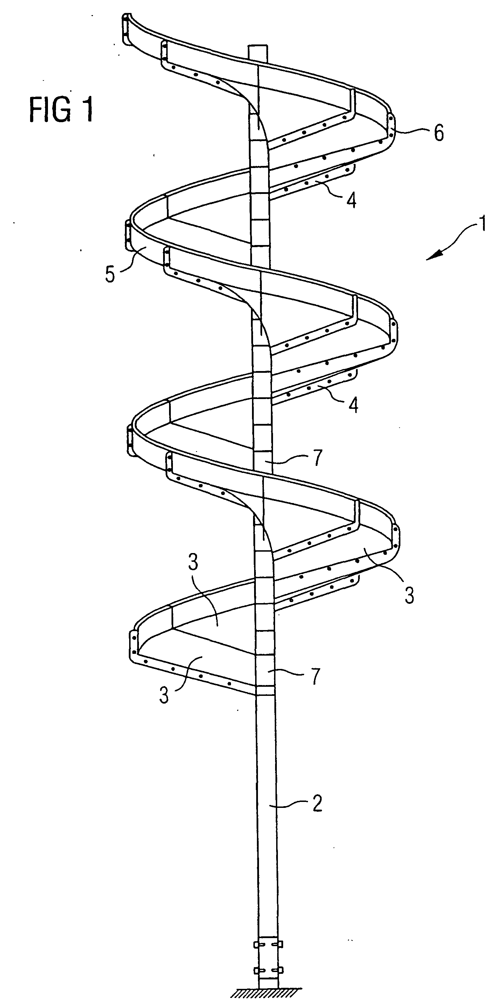

In Fig. 1 ist schematisch eine Spiralrutsche nach der Erfindung dargestellt, die allgemein mit 1 bezeichnet ist. Erkennbar besteht diese aus einer zentralen senkrechten Tragsäule 2 an der die kreissegmentförmigen Platten 3 wendelförmig befestigt sind und zu der Gleitbahn der Spiralrutsche 1 zusammengefügt sind. Die einzelnen kreissegmentförmigen Platten 3 sind an ihren Längsseiten 8 und 9 (Fig. 2) mit sich nach unten erstreckenden Befestigungsflanschen 4 versehen, wobei jeweils sich gegenüberliegende Befestigungsflansche 4 zweier benachbarter kreissegmentförmiger Platten 3 miteinander verschraubt sind. Erkennbar wird die aus den Platten 3 zusammengesetzte Gleitbahn seitlich außen durch senkrechte Wände 5 begrenzt, die über die gesamte Länge der Gleitbahn verlaufen und ebenfalls aus einzelnen Segmenten zusammengeschraubt sein können. Dazu sind auch die Wände 5 mit Flanschen 6 versehen, wobei ebenfalls zwei benachbarte Flansche 6 benachbarter Wände 5 miteinander verschraubt sind.

Wie erkennbar sind die kreissegmentförmigen Platten 3 und deren Wände 5 modular ausgebildet. Jede Platte 3 ist an einer Buchse 7 befestigt, die die Tragsäule 2 koaxial umgreifen und auf diese aufgesteckt sind. Auf diese Weise können die verschiedenen Module nach einfachem Aufstecken auf die Tragsäule 2 in die gewünschte Position gebracht werden, in der sie an ihren Flanschen 4 miteinander verschraubbar sind. Zusätzliche Sicherungen, beispielsweise durch Verschweißen sind denkbar.

Die Ausbildung der einzelnen kreissegmentförmigen Platten 3 erkennt man am besten in Fig. 2. Jede Platte ist, wie beschrieben, kreissegmentförmig wobei die beiden Längsseiten der in Fig. 2 dargestellten untersten kreissegmentförmigen Platte mit 8 und 9 bezeichnet sind. Die Außenseite der Platte 3, an der die Seitenwand 5 befestigt ist ist mit 10 bezeichnet, die schmale Innenseite, welche an der Buchse 7 verschweißt ist, ist mit 11 bezeichnet. Da die vertikale Höhendifferenz zwischen der Längsseite 8 und der Längsseite 9 der kreissegmentförmigen Platte 3 sowohl an der Außenseite (Wandseite), wie auch der Innenseite (Tragsäulenseite) der Platte 3 gleich ist, jedoch die Außenseiten 10 und 11 unterschiedlich lang sind, ergibt sich an der Befestigungsseite wo die Platte 3 mit der Buchse 7 verschweißt ist, eine deutlich größere Steigung der Platte 3, als an der Außenseite 10. Um diese Differenzen auszugleichen, wird erfindungsgemäß vorgeschlagen, jede kreissegmentförmige Platte 3 in mehrere nebeneinander angeordnete Dreieckflächen 12a - 12h aufzuteilen, wobei jede der Dreieckflächen in einer anderen, zu der jeweiligen Nachbardreieckfläche geneigten Ebene angeordnet ist. Die einzelnen Dreieckflächen sind derartig abgekantet, dass jeweils abwechselnd eine Dreieckspitze 12a', 12b', 12c' usw. auf der Längsseite 8 bzw. 9 der Platte 3 orientiert ist, während die Grundseite jedes Dreieckes 12a'', 12b'', 12c'' usw. jeweils auf der der Spitze gegenüberliegenden anderen Längsseite 8 oder 9 der Platte orientiert ist. Das bedeutet, dass die Grundseiten 12a, 12c, 12e und 12g bzw. 12b, 12d, 12f und 12h jedes zweiten Dreieckes und die Spitzen 12a', 12c', 12e' und 12g' bzw. 12b', 12d', 12f' und 12h' jeden zweiten Dreieckes jeweils auf ein und derselben Linie, nämlich der Längsseite 8 bzw. 9 der kreissegmentförmigen Platte 3 angeordnet sind. Auf diese Weise kann problemlos der Steigungsunterschied der Seiten 10 und 11 ausgeglichen werden, ohne dass eine starke Abstufung innerhalb der kreissegmentförmigen Platte 3 stattfindet.

In Fig. 2 sind auch deutlich die Buchsen 7 zu erkennen, an denen die Platten 3 befestigt sind und die auf die - hier nicht erkennbare - Tragsäule 2 aufschiebbar sind. Erkennbar sind ebenfalls die Wandteile 5 der einzelnen Platten, sowie, im Vordergrund der Zeichnungsfigur 2, der senkrechte Flansch 4 sowohl im Bereich der Platte 3 als auch im Bereich der Wand 5 mit den Befestigungslöchern bzw. Schrauben, um die benachbarten kreissegmentförmigen Platten 3 zu einer durchgehenden Gleitbahn zu verbinden. Aus beiden Zeichnungsfiguren ist erkennbar, dass die Flansche 4 Tragarme für die kreissegmentförmigen Platten 3 bilden, wobei diese Tragarme bzw. Flansche 4 sich, von der Tragsäule 2 ausgehend, in einem Winkel zwischen 0° - 30°, vorzugsweise 15° nach oben erstrecken.

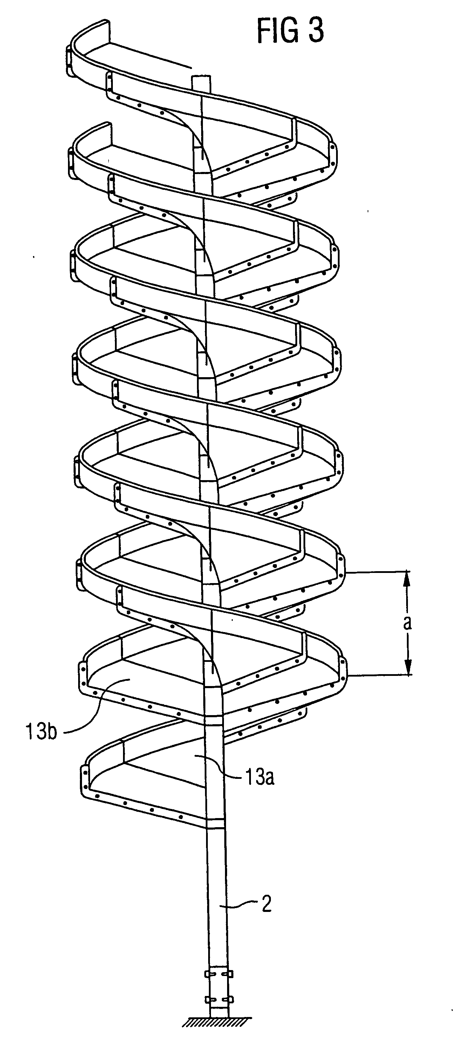

In Figur 3 ist eine günstige Alternative der Erfindung dargestellt. Wie erkennbar, sind zwei Gleitbahnen 13a und 13b an ein derselben Tragsäule 2 in der Art eines zweigängigen Gewindes angeordnet. Der axiale Abstand a der Gleitbahnen 13a und 13b voneinander ist abhängig von den Größenabmessungen des zu transportierenden Gutes und den Steigungen der Gleitbahnen. Diese Anordnung erhöht die Kapazität der Spiralrutsche 1, ohne den Raumbedarf zu erhöhen.

In Figur 4 ist eine andere Alternative zur Erhöhung der Kapazität unter Verwendung der erfindungsgemäßen Spiralrutsche 1 dargestellt. Zwei der Spiralrutschen 1a uind 1b sind so dicht nebeneinander gestellt, dass die Gleitbahn 13a der einen Spiralrutsche 1a zwischen die Gleitbahn 13b der anderen Spiralrutsche 1b greift. Dadurch wird es möglich, den lichten Abstand b der Tragsäulen 2 kleiner zu halten, als die Summe der Radien r₁ + r₂ der beiden benachbarten Spiralrutschen 1a und 1b. Der Platzbedarf beider Spiralrutschen 1a und 1b ist somit deutlich reduzierbar, die Kapazität jedoch verdoppelbar.

## Patentansprüche

1. Spiralrutsche (1) zum Transportieren von Stückgütern von einer höhergelegenen Transportebene zu einer tiefergelegenen Transportebene, bestehend aus einer zentralen senkrechten Tragsäule (2), an der kreissegmentförmige, an ihren beiden radialen Längsseiten (8,9) zu einer Gleitbahn zusammengefügte Platten (3) wendelförmig und koaxial zu der Tragsäule (2) an dieser befestigt sind, wobei die Platten (3) auf ihren der Tragsäule (2) abgewandten Außenseiten (10) durch eine gemeinsame, im wesentlichen senkrechte Wand (5) begrenzt sind, die über die gesamte Länge der Gleitbahn verläuft und wobei zum Ausgleich der auf der Innenseite und der Außenseite der Gleitbahn unterschiedlichen Wendelsteigungen jede kreissegmentförmige Platte (3) in zueinander geneigte ebene Dreieckflachen (12a-12h) mit jeweils einer gemeinsamen Dreieckseite unterteilt ist, wobei jeweils eine andere Dreieckseite jeder dieser Dreieckflächen (12a-12h) mit einer höhergelegenen oder einer tiefergelegenen Längsseiten der kreissegmentförmigen Platte (3) korrespondiert,
**dadurch gekennzeichnet, dass** jede kreissegmentförmige Platte (3)in mehr als zwei nebeneinander angeordnete, abwechselnd in zueinander geneigten Ebenen orientierte Dreieckflächen (12a bis 12h) unterteilt ist, deren Dreieckspitzen (12a' bis 12h') und Dreieckgrundseiten (12a'' bis 12 h") benachbarter Dreieckflächen (12a bis 12h) jeweils auf ein und derselben der höhergelegenen oder der tiefergelegenen Längsseiten (8 bzw.9) der kreissegmentförmigen Platte (3) orientiert sind.

2. Spiralrutsche nach Anspruch 1, **dadurch gekennzeichnet, dass** die kreissegmentförmigen Platten (3) an ihren Längsseiten (8,9) mit sich nach unten erstreckenden Befestigungsflanschen (4) versehen sind, mit denen benachbarte Platten (3) miteinander verschraubbar sind.

3. Spiralrutsche nach Anspruch 1 oder 2, **dadurch gekennzeichnet, dass** die kreissegmentförmigen Platten (3) modular ausgeführt sind und jeweils mittels einer die Tragsäule (2) koaxial umgreifenden Buchse (7) auf diese aufsteckbar sind, wobei die kreissegmentförmigen Platten (3) mittels radial auskragender Tragarme (4) an den Buchsen (7) befestigt sind.

4. Spiralrutsche nach Anspruch 3, **dadurch gekennzeichnet, dass** die radial auskragenden Tragarme (4) von der Tragsäule (2) nach außen in einem Winkel zwischen 0° und 30° ansteigen.

5. Spiralrutsche nach Anspruch 3 oder 4, **dadurch gekennzeichnet, dass** die radial auskragenden Tragarme durch die sich nach unten erstreckenden Befestigungsflansche (4) an den Platten (3) gebildet werden.

6. Spiralrutsche nach den Ansprüchen 1 bis 5, **dadurch gekennzeichnet, dass** modulare Bauteile (3, 4, 5, 7) der Spiralrutsche mindestens teilweise gegeneinander fixiert werden.

7. Spiralrutsche nach den Ansprüchen 1 bis 5, **dadurch gekennzeichnet, dass** an ein und derselben Tragsäule (2) mehrere wendelförmige Gleitbahnen (13a und 13b) angeordet sind.

8. Spiralrutsche nach den Ansprüchen 1 bis 5, **dadurch gekennzeichnet, dass** mehrere Spiralrutschen (1a und 1b) dicht und ineinander verschachtelt angeordnet sind, wobei der lichte Abstand (a) zweier benachbarter Tragsäulen (1a und 1b) geringer als die Summe der Radien (r₁ + r₂) dieser benachbarten Spiralrutschen (1a und 1b) ist.

## Claims

1. Spiral chute (1) for transporting piece goods from a higher transport plane to a lower transport plane, comprising a central upright support column (2), on which plates (3) in the shape of circular segments joined together at their two radial longitudinal sides (8, 9) to form a sliding track are fixed in the form of a helix and coaxially to the support column (2), and the plates (3) being bounded on their outer sides (10) facing away from the support column (2) by a common, substantially vertical wall (5), which runs over the entire length of the sliding track, and, in order to compensate for the helical slopes which are different on the inside and the outside of the sliding track, each plate (3) in the form of a circular segment in a plane inclined with respect to one another being subdivided into triangular areas (12a - 12h) and each having a common triangle side, in each case another triangle side of each of these triangular areas (12a - 12h) corresponding to a higher or lower longitudinal side of a plate (3) in the form of a circular segment, **characterized in that** each plate (3) in the form of a circular segment is subdivided into more than two triangular areas (12a to 12h) arranged beside one another and oriented alternately in mutually inclined planes, of which the tips (12a' to 12h') of the triangles and the base sides (12a" to 12h") of the triangles of adjacent triangular areas (12a to 12h) are in each case oriented towards one and the same of the higher or the lower longitudinal sides (8 or 9) of the plate (3) in the shape of a circular segment.

2. Spiral chute according to Claim 1, **characterized in that** the plates (3) in the form of circular segments are provided on their longitudinal sides (8, 9) with fixing flanges (4) which extend downwards, with which adjacent plates (3) are screwed to one another.

3. Spiral chute according to Claim 1 or 2, **characterized in that** the plates (3) in the form of circular segments are of modular design and, by means of a bush (7) engaging coaxially around the support column (2), can be plugged onto the latter, the plates (3) in the form of circular segments being fixed to the bushes (7) by means of radially projecting supporting arms (4).

4. Spiral chute according to Claim 3, **characterized in that** the radially projecting supporting arms (4) rise outwards from the support column (2) at an angle between 0° - 30°.

5. Spiral chute according to Claim 3 or 4, **characterized in that** the radially projecting supporting arms are formed by the fixing flanges (4) extending downwards on the plates (3).

6. Spiral chute according to Claims 1 to 5, **characterized in that** modular components (3, 4, 5, 7) of the spiral chute are at least to some extent fixed to one another.

7. Spiral chute according to Claims 1 to 5, **characterized in that** a plurality of helical sliding tracks (13a and 13b) are arranged on one and the same support column (2).

8. Spiral chute according to Claims 1 to 5, **characterized in that** a plurality of spiral chutes (1a and 1b) are arranged closely and nested in one another, the clear spacing (a) between two adjacent support columns (2a and 2b) being smaller than the sum of the radii (r₁ + r₂) of these adjacent spiral chutes (1a and 1b).

## Revendications

1. Toboggan (1) hélicoïdal destiné à la manutention de charges isolées d'un niveau supérieur de transport à un niveau inférieur de transport, constitué d'un poteau (2) porteur central vertical sur lequel des plateaux (3) en forme de segment circulaire, assemblés par leurs deux grands côtés (8, 9) radiaux pour former une glissière, sont fixés en hélice et coaxialement à ce poteau, les plateaux (3) étant délimités sur leurs côtés (10) extérieurs opposés au poteau (2) porteur par une paroi (5) essentiellement verticale qui court sur toute la longueur de la glissière et, pour compenser les différences de pas des hélices du côté extérieur et du côté intérieur de la glissière, chaque plateau (3) en forme de segment circulaire subdivisé en surfaces triangulaires (12a à 12h) à plans inclinés l'un vers l'autre, ayant chaque fois un côté de triangle commun, un autre côté du triangle de chacune de ces surfaces (12a à 12h) triangulaires correspondant à un grand côté disposé plus haut ou à un grand côté disposé plus bas du plateau (3) en forme de segment circulaire,
**caractérisé en ce que** chaque plateau (3) en forme de segment circulaire est subdivisé en plus de deux surfaces (12a à 12h) triangulaires, juxtaposées et orientées de telle façon que leurs plans s'inclinent en alternance l'un vers l'autre, les pointes (12a' à 12h') de triangles et les bases (12a" à 12h") des triangles de surfaces (12a à 12h) triangulaires contiguës étant orientées vers un seul et même des grands côtés (8 respectivement 9) le plus haut ou le plus bas du plateau (3) en forme de segment circulaire.

2. Toboggan hélicoïdal suivant la revendication 1, **caractérisé en ce que** les plateaux (3) en forme de segment circulaire sont pourvus sur leurs grands côtés (8, 9) de flasques (4) de fixation s'étendant avec eux vers le bas, par lesquels les plateaux (3) contigus peuvent se visser les uns aux autres.

3. Toboggan hélicoïdal suivant la revendication 1 ou 2, **caractérisé en ce que** les plateaux (3) en forme de segment circulaire sont réalisés de façon modulaire, chaque module pouvant s'enfiler sur le poteau (2) porteur grâce à un manchon (7) enveloppant coaxialement le poteau, les plateaux (3) en forme de segment circulaire étant fixés aux manchons (7) par des bras (4) de support en saillie radiale.

4. Toboggan hélicoïdal suivant la revendication 3, **caractérisé en ce que** les bras (4) de support en saillie radiale s'éloignent du poteau (2) porteur en montant vers l'extérieur suivant un angle compris entre 0° et 30°.

5. Toboggan hélicoïdal suivant la revendication 3 ou 4, **caractérisé en ce que** les bras de support en saillie radiale sont formés par les flasques (4) de fixation sur les plateaux (3), s'étendant vers le bas.

6. Toboggan hélicoïdal suivant les revendications 1 à 5, **caractérisé en ce que** les éléments (3, 4, 5, 7) de construction modulaire du toboggan hélicoïdal sont, au moins partiellement, fixés l'un contre l'autre.

7. Toboggan hélicoïdal suivant les revendications 1 à 5, **caractérisé en ce que** plusieurs glissières (13a et 13b) hélicoïdales sont disposées sur un seul et même poteau (2) porteur.

8. Toboggan hélicoïdal suivant les revendications 1 à 5, **caractérisé en ce que** plusieurs toboggans (1a et 1b) hélicoïdaux sont disposés tout près l'une de l'autre et s'interpénètrent, deux poteaux (1a et 1b) porteurs voisins étant écartés d'une distance (a) inférieure à la somme des rayons (r₁ + r₂) de ces toboggans (1a et 1b) hélicoïdaux voisins.
